# EUROPEAN PATENT SPECIFICATION

(11) **EP 2 254 450 B1**
(45) Date of publication and mention of the grant of the patent: **09.05.2012**
(21) Application number: 09709641.6
(22) Date of filing: 12.02.2009
(51) Int. Cl.: A47J 31/40

(54) **BEVERAGE VENDING MACHINE MIXER**
GETRÄNKEVERKAUFSMASCHINENMISCHVORRICHTUNG
MÉLANGEUR POUR DISTRIBUTEUR DE BOISSON

(30) Priority: 13.02.2008 IT TO20080110
(43) Date of publication of application: 01.12.2010
(73) Proprietor: N&W Global Vending S.p.A., Valbrembo (IT)
(72) Inventor: SIRBU VILLA, Dan, Alexie, 24040 Bonate Sotto (IT)
(74) Representative: Jorio, Paolo
(86) International application number: PCT/IB2009/000244
(87) International publication number: WO 2009/101510

(56) References cited:
- EP-A- 0 843 983
- EP-A- 1 639 924
- WO-A-03/005868
- WO-A-03/082066
- WO-A-2006/073317
- WO-A-2007/045949
- FR-A1- 2 820 021
- US-A1- 2005 079 265

## Description

### TECHNICAL FIELD

The present invention relates to a beverage vending machine mixer.

### BACKGROUND ART

A beverage vending machine mixer normally comprises a hollow body with a mixing chamber inside, to which soluble material and water are fed through respective inlets. Downstream from the mixing chamber, the hollow body has a blending chamber that communicates with the mixing chamber and with a beverage outflow conduit, and houses a blending device normally comprising an impeller connected angularly to the output shaft of an electric motor. To enable thorough cleaning of the mixer by the operator, the impeller is normally connected removably the shaft.

A beverage vending machine mixer of the above type is disclosed, for example, in EP 1 639 924.

Known systems currently used to connect the impeller removably to the shaft have the drawback of normally being fairly complicated in terms of assembly, which may often call for considerable accuracy on the part of the operator. The problem is obviously also further compounded by the mixer having to be cleaned relatively frequently, and often being located in a poorly illuminated part of the machine that is hard to reach.

### DISCLOSURE OF INVENTION

It is an object of the present invention to provide a beverage vending machine mixer of the type described above, that is cheap and easy to produce and at the same time designed to eliminate the above drawbacks.

According to the present invention, there is provided a beverage vending machine mixer as claimed in Claim 1 and preferably in any one of the Claims depending directly or indirectly on Claim 1.

### BRIEF DESCRIPTION OF THE DRAWINGS

A non-limiting embodiment of the present invention will be described by way of example with reference to the accompanying drawings, in which:
Figure 1 shows a section, with parts removed for clarity, of a preferred embodiment of the mixer according to the present invention;
Figure 2 shows a larger-scale view in perspective of a detail in Figure 1;
Figures 3 and 4 show a side view and front view respectively of a detail in Figure 2;
Figure 5 shows a section along line V-V in Figure 4;
Figure 6 shows an exploded view of a detail in Figure 4 in two alternative configurations;
Figures 7 and 8 show sections along lines VII-VII and VIII-VIII in Figure 6 respectively;
Figure 9 shows a rear view of Figure 6.

### BEST MODE FOR CARRYING OUT THE INVENTION

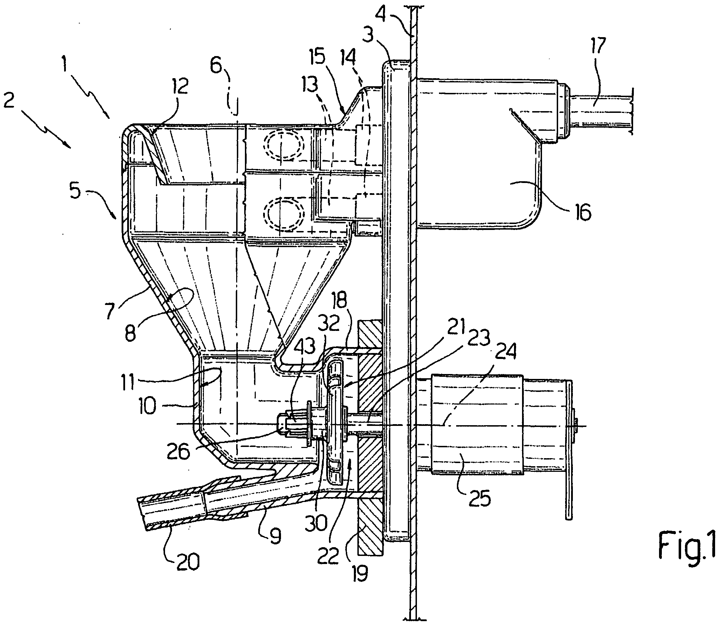

Number 1 in Figure 1 indicates as a whole a mixer for a beverage vending machine 2.

Mixer 1 comprises a support 3 defined by a plate connected to a fixed wall 4 of machine 2 and facing a door (not shown) of machine 2.

Mixer 1 also comprises a hollow mixing body 5 having a substantially vertical axis 6 and in turn comprising a top portion 7 defining a mixing chamber 8; a bottom beverage outflow conduit 9; and an intermediate portion 10 interposed between top portion 7 and outflow conduit 9, an internally defining a blending chamber 11.

More specifically, as shown in Figure 1, top portion 7 is funnel-shaped with a top inlet 12 coaxial with axis 6 and normally positioned facing one or more known spouts (not shown) to receive metered quantities of soluble material from one or more known tanks (not shown).

Close to inlet 12, top portion 7 has two water inlets defined by the outlets of two conduits 13 connected rigidly to top portion 7 and connected, by respective tubular fittings 14 integral with support 3, to the delivery side of a known pump (not shown) to simultaneously or selectively feed water into mixing chamber 8.

Just above conduits 13 and the free edge of inlet 12, a steam suction opening 15 defines the outlet of a condensation cell (not shown in Figure 1) housed inside a pocket 16 of support 3 and connected to a suction circuit 17.

With reference to Figure 1, intermediate portion 10 is defined by an elbow-shaped member integral with top portion 7 and defining blending chamber 11. At its free end facing support 3, intermediate portion 10 comprises a cylindrical portion 18 connected to support 3 by a removable joint 19 and defining at the bottom the inlet of outlet conduit 9, which extends frontwards of mixer 1 from cylindrical portion 18, and is fitted with an outflow hose 20.

Cylindrical portion 18 also defines a seat for an impeller 21 of a blender 22, which serves to stir the mixture of soluble material and water from mixing chamber 8 to fully dissolve the material and supply a homogeneous beverage to outflow conduit 9.

Impeller 21 is connected removably - as described in detail below - to a drive shaft 23, which has an axis of rotation 24 perpendicular to wall 4, extends inside blending chamber 11, and defines the output of an electric motor 25 forming part of blender 22 and fitted to the opposite side of wall 4 from mixer 1.

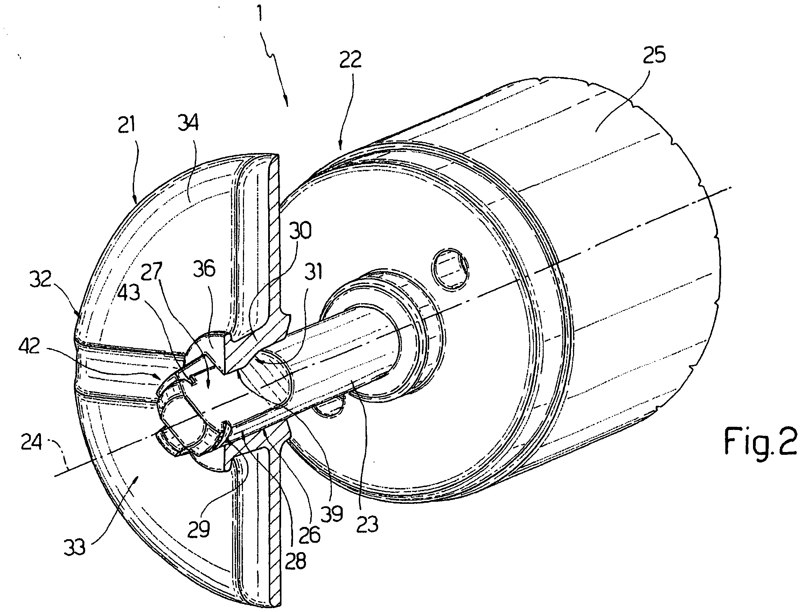

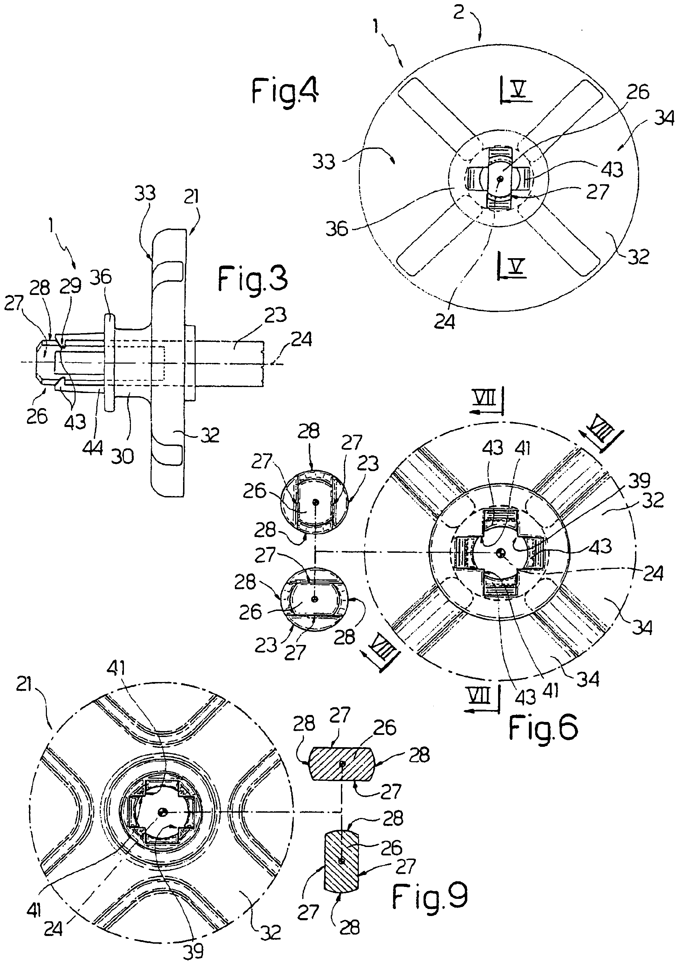

As shown in Figures 2, 3, 7 and 8, drive shaft 23 comprises a free-end portion 26 bounded laterally by two flat parallel faces 27 on opposite sides of axis 24, and by two cylindrical faces 28, which are coaxial with axis 24, connect flat faces 27, and each have a respective groove 29 lying, together with the other groove 29, in a plane perpendicular to axis 24.

As shown in Figures 2 to 6, impeller 21 comprises a central hub 30, which has a through hole 31 engaged by end portion 26 of drive shaft 23, and a disk 32 integral with hub 30 and bounded, on the side facing blending chamber 11, by a flat annular surface 33 having a rounded free edge, and four radial grooves equally spaced about axis 24 to define four flat blades 34 on annular surface 33.

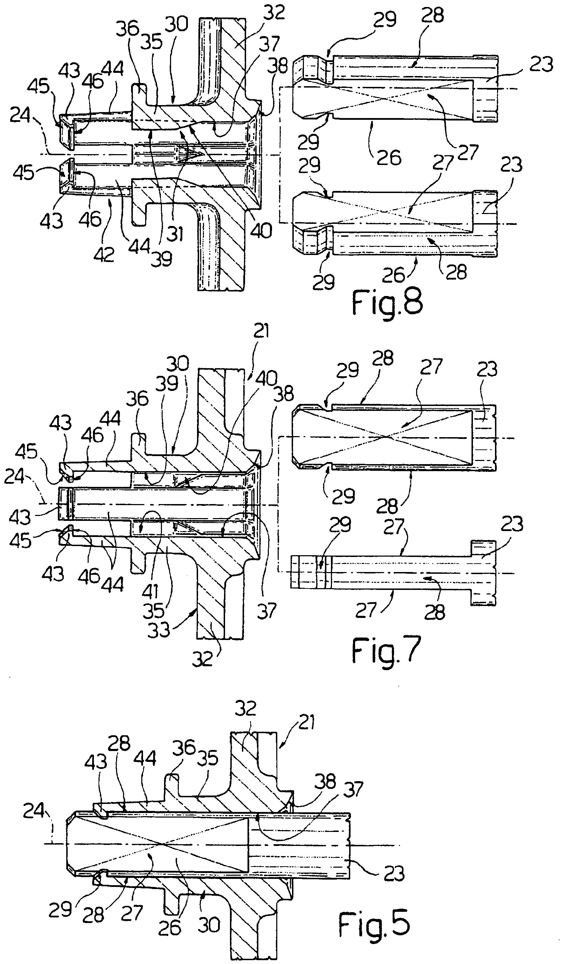

As shown in Figures 7 and 8, hub 30 comprises a front portion 35 that projects axially from annular surface 33 towards blending chamber 11, and is fitted on its free end with a circular flange 36 that projects radially outwards from front portion 35 and defines, in use, a user grip by which to grip impeller 21 to detach and refit it from and to drive shaft 23.

With reference to Figures 7 to 9, hole 31 comprises a cylindrical inlet hole 37 coaxial with axis 24 and having a truncated-cone-shaped lead-in flare 38 for end portion 26; and a cross-shaped hole 39 which is coaxial with axis 24, is connected to cylindrical hole 37 by a truncated-cone-shaped portion 40, and defines two rectangular-section seats 41 coaxial with each other and with axis 24, and each designed to receive end portion 26 of drive shaft 23 in sliding and angularly fixed manner.

To lock hub 30 axially onto drive shaft 23, impeller 21 comprises a click-on retaining device 42 comprising four teeth 43, which are carried by flange 36 and each associated with a respective end of a respective seat 41, so that, when impeller 21 is fitted onto drive shaft 23, the teeth 43 associated with the seat 41 engaged by end portion 26 click into grooves 29. For this purpose, as shown in Figures 5 to 9, teeth 43 face axis 24 and are each connected to the respective end of relative seat 41 by a respective elastically deformable rod 44 extending axially from flange 36 towards blending chamber 11.

As shown in Figure 5, each tooth 43 has a trapezoidal cross section, and is bounded externally by a face 45 sloping with respect to axis 24 by an angle of less than 90°, and which, when tooth 43 engages respective groove 29, cooperates with a surface of groove 29 sloping at the same angle as face 45 and which, when impeller 21 is withdrawn axially from end portion 26 of drive shaft 23, serves to flex relative rod 44 outwards and assist radial withdrawal of tooth 43 from groove 29.

On the side facing flange 36, each tooth 43 is bounded by a face 46 perpendicular to axis 24, and which, when tooth 43 engages respective groove 29, cooperates with a corresponding surface of groove 29 defining a shoulder to axially arrest impeller 21.

To conclude, it should be pointed out that, when assembling impeller 21 onto end portion 26, cross-shaped hole 39 allows the operator to fit hub 30 onto end portion 26 quickly and easily.

That is, regardless of the initial angular position of seats 41 with respect to flat faces 27 of end portion 26, the operator is able to align one of the two seats 41 axially with flat faces 27 by rotating impeller 21 about axis 24 by an angle of always less than 90°.

In a variation not shown, cross-shaped hole 39 may be defined by more than two seats 41 coaxial with one another and with axis 24 and equally spaced about axis 24. This provides, when assembling impeller 21, for further reducing the angle by which hub 30 must be rotated by the operator to align a seat 41 axially with flat faces 27.

## Claims

1. A mixer for a beverage vending machine (2); the mixer (1) comprising a blending chamber (11), and a blender (22) in turn comprising a drive shaft (23) rotating about a longitudinal axis (24), and an impeller (21) housed inside the blending chamber (11) and fitted removably to the drive shaft (23) to rotate about the axis (24); the mixer (1) being **characterized in that** the drive shaft (23) comprises an end portion (26) having two lateral, parallel flat faces (27) on opposite sides of the axis (24); and **in that** the impeller (21) comprises a hub (30) having at least two substantially rectangular-section seats (41) coaxial with each other and with the axis (24); each of the seats (41) being designed to receive the whole end portion (26) of the drive shaft (23) in sliding and angularly fixed manner, so that only one of the two seats (41) is selectively engaged by the end portion (26) of the drive shaft (23); and the seats (41) defining between them a cross-shaped hole (39) coaxial with the axis (24).

2. A mixer as claimed in Claim 1, wherein the end portion (26) of the drive shaft (23) is bounded laterally by said two flat parallel faces (27) and by two cylindrical faces (28), which are coaxial with the axis (24) and connect the flat faces 27 to one another.

3. A mixer as claimed in Claim 1 or 2, wherein the hub (30) has a through hole (31) coaxial with the axis (24); the through hole (31) having a first and a second portion (38, 39); the first portion (38) being a truncated-cone-shaped lead-in portion, and the second portion being said cross-shaped hole (39).

4. A mixer as claimed in Claim 3, wherein the through hole (31) has a cylindrical inlet portion (37).

5. A mixer as claimed in one of the foregoing Claims, wherein releasable retaining means (42) are provided to connect the impeller (21) in axially fixed manner to the drive shaft (23).

6. A mixer as claimed in Claim 5, wherein the retaining means (42) are click-on retaining means.

7. A mixer as claimed in Claim 5 or 6, wherein the end portion (26) of the drive shaft (23) comprises two connecting surfaces (28) connecting the two flat faces (27); the connecting surfaces (28) having respective grooves (29) in a plane perpendicular to the axis (24); the retaining means (42) comprising a number of teeth (43) carried by the impeller (21); each tooth (43) being associated with a respective said seat (41), and extending from the hub (30) at a respective end of the respective seat (41); and each tooth (43) associated with the seat (41) engaged by the end portion (26) of the drive shaft (23) engaging a respective said groove (29).

8. A mixer as claimed in Claim 7, wherein the connecting surfaces (28) are cylindrical surfaces coaxial with the axis (24).

9. A mixer as claimed in Claim 7 or 8, wherein the hub (30) comprises a number of elastically deformable, axial rods (44); each rod (44) supporting on its free end a respective said tooth (43) facing the axis (24).

10. A beverage vending machine comprising at least one mixer (1) as claimed in any one of Claims 1 to 9.

## Patentansprüche

1. Mischvorrichtung für eine Getränkeverkaufsmaschine (2); wobei die Mischvorrichtung (1) eine Mischkammer (11) und einen Mixer (22) umfasst, welcher wiederum eine Antriebswelle (23) umfasst, die sich um eine Längsachse (24) dreht, sowie einen Rührflügel (21), der innerhalb der Mischkammer (11) untergebracht ist und lösbar mit der Antriebswelle (23) verbunden ist, um sich um die Achse (24) zu drehen; wobei die Mischvorrichtung (1) **dadurch gekennzeichnet ist, dass** die Antriebswelle (23) einen Endabschnitt (26) mit zwei seitlichen, parallelen flachen Außenflächen (27) an entgegengesetzten Enden der Achse (24) umfasst; und dadurch dass der Rührflügel (21) eine Nabe (30) mit mindestens zwei zueinander und mit der Achse (24) koaxialen Sitzen (41) mit im wesentlichen rechtwinkligem Querschnitt umfasst; wobei jeder der Sitze (41) dazu konstruiert ist, den gesamten Endabschnitt (26) der Antriebswelle (23) auf gleitende und winkelfeste Weise aufzunehmen, so dass lediglich einer der beiden Sitze (41) wählbar mit dem Endabschnitt (26) der Antriebswelle (23) in Eingriff ist; und die Sitze (41) zwischen sich ein kreuzförmiges, zu der Achse (24) koaxiales Loch (39) definieren.

2. Mischvorrichtung gemäß Anspruch 1, wobei der Endabschnitt (26) der Antriebswelle (23) seitlich durch die beiden flachen parallelen Außenflächen (27) und durch zwei zylindrische Außenflächen (28) begrenzt ist, welche zu der Achse (24) koaxial sind und die flachen Außenflächen (27) miteinander verbinden.

3. Mischvorrichtung gemäß Anspruch 1 oder 2, wobei die Nabe (30) ein zu der Achse (24) koaxiales Durchloch (31) aufweist; wobei das Durchloch (31) einen ersten und einen zweiten Abschnitt (38, 39) hat; wobei der erste Abschnitt (38) ein stumpfkegelförmiger Einlaufabschnitt ist und der zweite Abschnitt das kreuzförmige Loch (39) ist.

4. Mischvorrichtung gemäß Anspruch 3, wobei das Durchloch (31) einen zylinderförmigen Einlassabschnitt (37) aufweist.

5. Mischvorrichtung gemäß irgendeinem der vorhergehenden Ansprüche, wobei lösbare Haltemittel (42) vorgesehen sind, um den Rührflügel (21) auf axial fixierte Weise mit der Antriebswelle (23) zu verbinden.

6. Mischvorrichtung gemäß Anspruch 5, wobei die Haltemittel (42) einrastende Haltemittel sind.

7. Mischvorrichtung gemäß Anspruch 5 oder 6, wobei der Endabschnitt (26) der Antriebswelle (23) zwei Verbindungsflächen (28) umfasst, welche die beiden flachen Außenflächen (27) verbinden; wobei die Verbindungsflächen (28) jeweils Nuten (29) in einer zu der Achse (24) senkrechten Ebene aufweisen; die Haltemittel (42) eine Anzahl von Zähnen (43) umfassen, die von dem Rührflügel (21) getragen werden; wobei jeder Zahn (43) einem jeweiligen Sitz (41) zugeordnet ist und sich von der Nabe (30) an einem jeweiligen Ende des jeweiligen Sitzes (41) erstreckt; und jeder dem von dem Endabschnitt (26) der Antriebswelle (23) in Eingriff genommenen Sitz (41) zugeordnete Zahn (43) in eine jeweilige Nut (29) eingreift.

8. Mischvorrichtung gemäß Anspruch 7, wobei die Verbindungsflächen (28) zu der Achse (24) koaxiale zylindrische Oberflächen sind.

9. Mischvorrichtung gemäß Anspruch 7 oder 8, wobei die Nabe (30) eine Anzahl von elastisch verformbaren, axialen Stäben (44) umfasst; wobei jeder Stab (44) an seinem freien Ende einen jeweiligen, der Achse (24) zugewandten Zahn (43) trägt.

10. Getränkeverkaufsmaschine umfassend mindestens eine Mischvorrichtung (1) gemäß irgendeinem der Ansprüche 1 bis 9.

## Revendications

1. Mixeur pour une machine distributrice de boissons (2) ; le mixeur (1) comprenant une chambre de mélange (11), et un mélangeur (22) comprenant lui-même un arbre d'entraînement (23) tournant autour d'un axe longitudinal (24), et une hélice (21) logée à l'intérieur de la chambre de mélange (11) et ajustée de façon amovible sur l'arbre d'entraînement (23) pour tourner autour de l'axe (24) ; le mixeur (1) étant **caractérisé en ce que** l'arbre d'entraînement (23) comprend une portion d'extrémité (26) ayant deux faces plates latérales parallèles (27) sur des côtés opposés de l'axe (24) ; et **en ce que** l'hélice (21) comprend un moyeu (30) ayant au moins deux assises de section sensiblement rectangulaires (41) coaxiales l'une avec l'autre et avec l'axe (24) ; chacune des assises (41) étant conçue pour recevoir la portion d'extrémité entière (26) de l'arbre d'entraînement (23) de manière coulissante et fixe angulairement, de sorte que seulement une des deux assises (41) est mise en prise sélectivement par la portion d'extrémité (26) de l'arbre d'entraînement (23) ; et les assises (41) définissant entre elles un trou en forme de croix (39) coaxial avec l'axe (24).

2. Mixeur selon la revendication 1, dans lequel la portion d'extrémité (26) de l'arbre d'entraînement (23) est délimitée latéralement par lesdites deux faces plates parallèles (27) et par deux faces cylindriques (28), qui sont coaxiales avec l'axe (24) et relient les faces plates (27) l'une à l'autre.

3. Mixeur selon la revendication 1 ou 2, dans lequel le moyeu (30) comprend un trou traversant (31) coaxial avec l'axe (24), le trou traversant (31) ayant une première et une seconde portion (38, 39) ; la première portion (38) étant une portion d'entrée en forme de cône tronqué, et la seconde portion étant ledit trou en forme de croix (39).

4. Mixeur selon la revendication 3, dans lequel le trou traversant (31) a une portion d'entrée cylindrique (37).

5. Mixeur selon l'une des revendications précédentes, dans lequel des moyens de retenue libérables (42) sont disposés pour raccorder l'hélice (21) de manière fixe axialement à l'arbre d'entraînement (23).

6. Mixeur selon la revendication 5, dans lequel les moyens de retenue (42) sont des moyens de retenue clipsables.

7. Mixeur selon la revendication 5 ou 6, dans lequel la portion d'extrémité (26) de l'arbre d'entraînement (23) comprend deux surfaces de raccordement (28) raccordant les deux faces plates (27) ; les surfaces de raccordement (28) ayant des rainures respectives (29) dans un plan perpendiculaire à l'axe (24) ; les moyens de retenue (42) comprenant un certain nombre de dents (43) portées par l'hélice (21) ; chaque dent (43) étant associée à une dite assise respective (41) et s'étendant depuis le moyeu (30) à une extrémité respective de l'assise respective (41) ; et chaque dent (43) associée à l'assise (41) mise en prise par la portion d'extrémité (26) de l'arbre d'entraînement (23) mettant en prise une dite rainure respective (29).

8. Mixeur selon la revendication 7, dans lequel les surfaces de raccordement (28) sont des surfaces cylindriques coaxiales avec l'axe (24).

9. Mixeur selon la revendication 7 ou 8, dans lequel le moyeu (30) comprend un certain nombre de tiges axiales déformables élastiquement (44) ; chaque tige (44) supportant sur son extrémité libre une dite dent (43) respective en regard de l'axe (24).

10. Machine distributrice de boissons comprenant au moins un mixeur (1) selon l'une quelconque des revendications 1 à 9.
